Europäisches Patentamt

European Patent Office

Office européen des brevets

(11) Publication number: **0 211 466**
**B1**

(12) **EUROPEAN PATENT SPECIFICATION**

(45) Date of publication of patent specification: **31.01.90**

(51) Int. Cl.⁵: **C 08 L 53/02**

(21) Application number: **86201334.9**

(22) Date of filing: **29.07.86**

(54) Composition for processing by melt-spinning or melt-blowing.

(30) Priority: **01.08.85 GB 8519379**

(43) Date of publication of application:
**25.02.87 Bulletin 87/09**

(45) Publication of the grant of the patent:
**31.01.90 Bulletin 90/05**

(84) Designated Contracting States:
**AT BE CH DE FR GB IT LI LU NL SE**

(56) References cited:
**US-A-4 491 648**

(73) Proprietor: **SHELL INTERNATIONALE
RESEARCH MAATSCHAPPIJ B.V.
Carel van Bylandtlaan 30
NL-2596 HR Den Haag (NL)**

(72) Inventor: **Vermeire, Hans Ferdinand
Badhuisweg 3
NL-1031 CM Amsterdam (NL)**

(74) Representative: **Aalbers, Onno et al
P.O. Box 302
NL-2501 CH The Hague (NL)**

The file contains technical information
submitted after the application was filed and
not included in this specification

Courier Press, Leamington Spa, England.

# EP 0 211 466 B1

**Description**

The invention relates to a melt-spinnable or melt-blowable composition. More in particular the invention relates to a melt-spinnable or melt-blowable composition based on two different block copolymers. The invention also relates to fibres manufactured from such compositions.

Melt-spinning processes and melt-blowing processes are closely related and may both be employed in the production of polymeric fibres and fibre-based structures. The processes have in common that a stream of molten polymer is extruded through one or more die openings and the thus produced fibre is drawn away at a higher speed than at which it is extruded, but differ in the manner in which the fibre is drawn away. With the melt-blowing process the drawing away step is effected by blowing (hot) air or gas along the extruded fibre, as has been described in US Patent Specifications 3,825,380 and 3,379,811, and the ultimate fibre is collected e.g. on a screen, as a web (non-woven). With the melt-spinning process, however, the thermoplastic fibre is drawn away by means of a take-up spool which has a higher linear speed than the speed of extrusion. This process is also briefly described in US Patent Specification 3,379,811.

For compounds to be successfully employed in the production of fibres in a process as described hereinbefore, they have to fulfil two basic requirements:—
a) they have to be sufficiently thermoplastic to allow compounding, mixing and extruding, and
b) after extrusion the molten polymer stream or fibre should have sufficient strength to withstand handling e.g. stretching and confectioning etc. without fracturing.

Compounds which meet these requirements generally comprise a single thermoplastic polymer, a mixture of thermoplastic polymers, or one or more thermoplastic polymers having dyes, additives, modifying agents or processing aids therein. Although fibres based on these compounds find a wide application, there is a growing demand for similarly provided elastic fibres. For various reasons, however, it has not proven possible to employ conventional elastomers in the production of such fibres via the above processes. For one, the conventional elastomers lack thermoplasticity and moreover will generally be too viscous to allow processing by the above techniques. Furthermore, these polymers generally obtain their mechanical properties e.g. tensile strength and elasticity, only after undergoing a chemical reaction, i.e. after vulcanization, which would simultaneously result in an unacceptable change in the rheology of these polymers, rendering them unsuitable for these processes. Hence, although it is conceivable that certain elastomer-based compounds may be successfully extruded, the insufficient strength of the unvulcanized fibre produced would no doubt result in premature fracture thereof during subsequent handling.

A class of elastomers which would be potentially suitable for use in such a process, are the thermoplastic rubbers, such as polystyrene-polybutadiene-polystyrene three block copolymers. However, the ultimate fibres are unsuitable for most applications, in view of their high degree of unsaturation.

European patent application 0 033 569 describes a method for the production of elastic fibres via the melt-blowing process. The fibres produced by said process were based on a commercial thermoplastic rubber, Kraton G 1652 (registered trade mark), being a three block copolymer having polystyrene endblocks and a rubbery polyethylene-butylene midblock; the overall styrene content being approximately 29% by weight. This document furthermore states that although the thermoplastic rubber as such could not be extruded to form fibres this could be remedied by blending said thermoplastic rubber with fatty chemicals such as stearic acid, which compound solubilized the thermoplastic rubber in the meltphase and enabled it to be extruded into fibres without the occurrence of melt fracture. In the specific example given, the thermoplastic rubber was formulated with 20% by weight of stearic acid. In order to enhance the performance of the thus obtained elastic fibres it was recommended to remove the solidified stearic acid particles, as their presence impeded the elastic movement of the rubber molecules. A proposed method to accomplish this is to soak the fibre in isopropyl alcohol. This post treatment is not only cumbersome but makes the process economically unattractive.

Surprisingly, a thermoplastic rubber composition has now been found, which can be successfully employed in the production of elastic fibres by a process such as melt-spinning or melt-blowing, but does not suffer the disadvantages of similar compositions described hereinbefore. The novel melt-spinnable or melt-blowable thermoplastic rubber composition distinguishes itself from the melt-spinnable or melt-blowable compositions of the prior art in that it is in essence an all rubber composition which does not contain a considerable amount of a low molecular weight fatty chemical processing aid, which has to be removed from the ultimate fibre by e.g. extraction. The novel compositions afford a great flexibility in formulating ultraviolet and oxidation-stable melt-spinnable and melt-blowable elastomeric compositions which are considerably easier to process than known compositions.

The invention provides therefore a melt-spinnable or melt-blowable composition consisting of:
a) from 55 to 85 parts by weight of at least one three block copolymer having two endblocks A and a midblock B, wherein the A blocks are monoalkenyl arene polymer blocks and the B block is a substantially completely hydrogenated conjugated diene polymer block, the number average molecular weight of the or each three block copolymer being in the range of from 16000 to 175000, the number average molecular weight of the A blocks being in the range of from 4000 to 30000 and the monoalkenyl arene content of the or each three block copolymer being in the range of from 10 to 50% by weight of that three block copolymer,
b) from 15 to 45 parts by weight of at least one two block copolymer C—D wherein the C block is a

2

EP 0 211 466 B1

monoalkenyl arene polymer block having a number average molecular weight in the range of from 4000 to 30000, and the D block is a substantially completely hydrogenated conjugated diene polymer block having a number average molecular weight in the range of from 25 to 75% of the number average molecular weight of the midblock B of the or each three block copolymer, the precursor blocks B and/or D present in the composition being hydrogenated to at least 80% of the aliphatic double bonds while the precursor blocks A and/or C being hydrogenated to not more than 25% of the alkenyl arene aromatic double bonds and wherein the total parts by weight of said three block copolymer or copolymers and of said two block copolymer or copolymers employed in said melt-spinnable or melt-blowable composition equals 100 parts by weight, and

c) optionally antidegradants, UV protectors, processing aids, antistatic agents, dyes, reflective inorganic fillers and small amounts of organic fillers.

Three block copolymers which may conveniently be employed in the present invention are commercially available, e.g. from Shell Chemical Company under the trade name Kraton G.

Methods for the preparation of such polymers are known from the art. US Patent Specification 3,595,942 not only describes some of the polymers employed in the compositions of the present invention but also describes suitable methods for their hydrogenation. The linear polymers result from sequential introduction of the desired monomers into the reaction vessel when using such initiators as lithium-alkyls or dilithiostilbene and the like, or by coupling a two-segment block copolymer with a di-functional coupling agent. The presence of any coupling residues in the polymer may be ignored for an adequate description of the polymers forming a part of the compositions of this invention.

It will be understood that both blocks A and B may be either homopolymer or random copolymer blocks as long as each block predominates in at least one class of the monomers characterizing the blocks and as long as the A blocks individually predominate in monoalkenyl arenes and the B blocks individually predominate in conjugated diene units. The term monoalkenyl arene will be taken to include especially styrene and its analogs and homologs including alphamethylstyrene and ring-substituted styrenes, particularly ring-methylated styrenes. The preferred monoalkenyl arenes are styrene and alpha-methylstyrene and styrene is particularly preferred. Conjugated dienes include butadiene, isoprene, piperylene, more specifically butadiene and isoprene, with butadiene being most preferred. When the monomer employed is butadiene, it is preferred that between 35 and 65 mol per cent of the condensed butadiene units in the butadiene polymer block have 1.2 configuration, as measured by a standard NMR technique. Thus, when such a block is hydrogenated, the resulting product is, or resembles, a regular copolymer block of ethylene and 1-butene. Most preferably, the 1,2 content is 45%. If the conjugated diene employed is isoprene, the resulting hydrogenated product is or resembles a regular copolymer block of ethylene and propylene. With these thermoplastic three block copolymers which may suitably be employed in the practice of the present invention the average molecular weights of the individual blocks are very important aspects and may vary only with certain limits. The monoalkenyl arene A blocks should have number average molecular weights in the order of 4000 to 30000, preferably 4500 to 12000 while the proportion of the monoalkenyl arene blocks should be between 10 and 50% by weight of the three block copolymer preferably between 12 and 35% by weight.

The total number average molecular weight of these three block copolymers and especially the upper limit thereof, is primarily dictated by the currently available equipment and should be in the range of from 16000 to 175000. The diene block molecular weight is thus effectively set by the limitations on the monoalkenyl arene block molecular weight, the weight percentage of the monoalkenyl arene together with the total molecular weight of the three block copolymer.

These molecular weights are most accurately determined by tritrum counting methods or osmotic pressure measurements.

The invention applies especially to the use of selectively hydrogenated polymers having the configuration before hydrogenation of the following typical species:

polystyrene-polybutadiene-polystyrene
poly(alpha-methylstyrene)-polybutadiene-poly(alpha-methylstyrene).

The C—D two block copolymer is also prepared via organolithium catalysis. Prior to hydrogenation the C block is a monoalkenyl arene polymer block and the D block is conjugated diene polymer block. Conjugated dienes include specifically butadiene, isoprene and piperylene with butadiene being preferred. When the diene employed is butadiene it is preferred that between 35 and 65 mol per cent of the condensed butadiene units in the butadiene polymer block have 1,2 configuration, as measured by a standard NMR technique. Preferably the C block is a polystyrene block. The average molecular weight of the C block is between 4000 and 30000, preferably between 4500 and 12000. The average molecular weight of the D block is between 25 and 75% of the molecular weight of the midblock B of the three block copolymer.

Hydrogenation of the precursor block copolymers is preferably effected by use of a catalyst comprising the reaction products of an aluminium alkyl compound with nickel or cobalt carboxylates or alkoxides under such conditions as to substantially completely hydrogenate at least 80% of the aliphatic double bonds while hydrogenating no more than 25% of the alkenyl arene aromatic double bonds. Preferred block copolymers are those where at least 99% of the aliphatic double bonds are hydrogenated while less than 5% of the aromatic double bonds are hydrogenated.

For reasons of compatibility and enhanced performance it is preferred that the average molecular

3

weight of the monoalkenyl arene blocks of the two block copolymer and of the three block copolymer should have approximately the same value while it is simultaneously preferred that the molecular weight of the rubbery aliphatic block of the two block copolymer is in the range of from 40 to 60% of the molecular weight of the midblock B of the three block copolymer.

The ratio in which the three block copolymer and the two block copolymer may be employed in the present invention is determined by both the rheological requirements i.e. the composition should demonstrate sufficient thermoplastic flow and melt strength to allow a fibre to be manufactured by way of a melt-spinning or melt-blowing process, and the tensile properties of the produced fibre which should be sufficiently high to allow handling and confectioning of the fibre without fracture occurring. It has been established that for reasons of good processibility the rubber blend should contain from 15% by weight of the two block copolymer while for the production of fibres having sufficiently high tensile strength the blend should not contain more than 45% by weight of the two block copolymer.

The blend of the three block copolymers and the two block copolymers which forms the basis of the extrudable composition can be obtained by melt-blending the hydrogenated three and two block copolymer in the required ratio in e.g. a continuous extruder mixer. Alternatively it is possible to blend e.g. solutions of the precursor three block copolymer and the precursor two block copolymer and subsequently hydrogenate the resulting precursor blend. A preferred method for making the blend, however, is to prepare the precursor three block copolymer and the precursor two block copolymer simultaneously in a single reactor. It will be understood by those skilled in the art that this may be accomplished by premature termination of the polymer growth for a preset portion of the living polymer present at a predetermined stage of the polymerization process; i.e. at a time when the average molecular weight of the polymer species corresponds with that of the precursor two block copolymers to be employed in the ultimate blend, and subsequently continuing the polymerization with the remaining polymer species in known manner to prepare the desired precursor three block copolymer. The ultimate blend of the thus prepared precursor three block copolymer and precursor two block copolymer may subsequently be hydrogenated in the same manner as employed for above-mentioned precursor blend or the individual precursor copolymers.

Although these three and two block copolymers show an excellent resistance towards degradation this property may be further enhanced by coformulating suitable antidegradants. Generally sterically hindered phenol-type of antioxidants used in combination with an equal amount of dilaurylthiodipropionate or a combination of zinc dibutyldithiocarbamate and a sterically hindered phenol provide an effective protection against oxidative and/or thermal degradation. If required the resistance to ultraviolet radiation can be further enhanced by incorporating suitable commercially available UV protectors and, if practical, reflective inorganic fillers such as titanium dioxide or zinc oxide.

For certain end uses it may also be beneficial to include small amounts of organic fillers or extenders in the composition. Suitable such fillers include polyolefins such as polyethylene and polypropylene, certain polystyrene grades such as anionic polystyrene may be incorporated and also non- or partially hydrogenated diene multiblock copolymers. Further supplementary materials such as processing aids, antistatic agents, dyes etc. may be included if and when required. The relative quantities of the various supplementary materials when used will to a large extent be determined by the processing conditions and the requirements of the ultimate application.

The invention will be further understood from the following examples wherein the individual performance properties of the compositions were measured as follows:

Melt viscosity: according to ASTM D 3835-79 employing an Instron capillary viscometer at a shear rate $\gamma=10$ sec$^{-1}$ and 1000 sec$^{-1}$ respectively.

Tensile strength and elongation at break: according to ASTM D 412 employing an Instron Tensile tester. The test samples (dumbbells) were cut from 2 mm thick slabs which had been prepared via injection molding.

Melt strength and draw ratio: for measuring these two important properties of melt-spinnable compositions there is no standard test method. However, it has been experienced that they may conveniently be measured by means of a "simulated melt-spinning process" comprising a Göttfert single-screw laboratory extruder (barrel φ 20 mm, L/D=20, output 10 g/min) fitted with a capillary die (φ 3 mm, L/D=10) which apparatus produces the fibre-like extrudate and a Rheotens apparatus as the take-up system which draws the fibre away. This combination of single-screw extruder and Rheotens which in the past has been used to study the draw resonance of thermoplastic polymers, such as polypropylene, has been described by J. Meissner in Rheol. Acta. 10, 230—242 (1971). The extruder was operated at a temperature in the range of 190—250°C. The distance between die-opening and the take-up rolls of the Rheotens was 0.18 m, while the acceleration of the take-up rolls was $1.2\times10^{-3}$ m/sec$^2$. In order to prevent the elastomeric fibre sticking to the take-up rolls, the latter were wetted continuously with ethanol. The draw ratio is defined as the ratio of the linear speed of the take-up roll (V) and the speed of extrusion (Vo).

Examples 1—3

A three block copolymer of polystyrene/polyethylene-butylene/polystyrene, wherein the number average molecular weight of the polystyrene blocks was 7500 and that of the polyethylene-butylene block 37500, was blended in an internal mixer with a two block copolymer of polystyrene/polyethylene-butylene, wherein the number average molecular weight of the polystyrene block was 7500 and that of the polyethylene-butylene block 18750, in the weight ratios of three block copolymer to two block copolymer of 80 to 20, 70 to 30 and 60 to 40, respectively.

The resulting blends were subsequently used to measure the melt viscosity, tensile strength and elongation at break, while for the composition of Example 2 the melt strength and draw ratio were also determined. The rheological performance of the compositions was judged by the value R, being the melt viscosity $\eta$ (240°C) measured at shear rate $\gamma=10$ sec$^{-1}$ over the corresponding value of $\eta$ at $\gamma=1000$ sec$^{-1}$, which value should be as close to unity as possible and preferably not higher than 4.5. Furthermore, it was established that only fibres having a tensile strength of at least 8 MPa are of interest. The results have been collected in Table 1.

Example 4

A blend of a three block copolymer of polystyrene/polyethylene-butylene/polystyrene, wherein the number average molecular weight of the polystyrene blocks was 4900 and that of the polyethylene-butylene block 60200 and of a two block copolymer of polystyrene/polyethylene-butylene wherein the number average molecular weight of the polystyrene block was 4900 and that of the polyethylene-butylene block 30100, which blend had been obtained in situ according to the hereinbefore described full sequential polymerization process followed by a hydrogenation step and wherein the weight ratio of three block copolymer to two block copolymer was 75 to 25, was evaluated in the same manner as the polymer blend of Example 2. The results have been incorporated in Table 1.

Examples A and B (comparative)

The three block copolymer and the two block copolymer which had been employed in the preparation of the blends of Examples 1—3 were blended in an internal mixer in the weight ratio of three block copolymer to two block copolymer of 90 to 10 and 50 to 50, respectively. The performance properties of these blends have been incorporated in Table 1.

TABLE 1

| Example | Blend composition %w | | Melt viscosity $\eta$ (240°C) | | $R^f$ | Tensile strength MPa | Elongation at break % | Melt strength 210°C g | Draw rat V/Vo |
|---|---|---|---|---|---|---|---|---|---|
| | Three block copolymer | Two block copolymer | $\gamma$=10 sec$^{-1}$ Pa.s | $\gamma$=1000 sec$^{-1}$ Pa.s | | | | | |
| 1 | 80[a] | 20[b] | 1000 | 240 | 4.17 | 29 | 610 | — | — |
| 2 | 70[a] | 30[b] | 600 | 165 | 3.64 | 23 | 680 | 12.9 7.5[e] | 3.0 5.0[e] |
| 3 | 60[a] | 40[b] | 370 | 120 | 3.08 | 14 | 680 | — | — |
| 4 | 75[c] | 25[d] | 600 | 260 | 2.31 | 24 | 750 | 3.2 | 17 |
| A (comparative) | 90[a] | 10[b] | 1600 | 340 | 4.70 | 31 | 600 | — | — |
| B (comparative) | 50[a] | 50[b] | 230 | 82 | 2.80 | 8 | 690 | — | — |

[a] $\bar{M}_n$ polystyrene blocks 7500, $\bar{M}_n$ polyethylene-butylene blocks 37500.
[b] $\bar{M}_n$ polystyrene block 7500, $\bar{M}_n$ polyethylene-butylene block 18750.
[c] $\bar{M}_n$ polystyrene blocks 4900, $\bar{M}_n$ polyethylene-butylene block 60200.
[d] $\bar{M}_n$ polystyrene block 4900, $\bar{M}_n$ polyethylene-butylene block 30100.
[e] Determined at 250°C.
[f] $R=\eta$ (10 sec$^{-1}$)/$\eta$ (1000 sec$^{-1}$) at 240°C.

Example 5

The 75/25 w/w blend of three block and two block copolymer of Example 4 was also used for a laboratory scale melt-spinning trial. To this end the polymer blend was dry-blended with 0.15 pbw (per 100 parts of polymer) of Irganox 1010 which is a trade name for pentaerythritol tetrakis[3 - (3',5' - ditert - butyl - 4' - hydroxyphenyl)propionate], antioxidant and 0.10 pbw of Kemamide E which is a trade name for eurucyl amide and subsequently fed into a vertically positioned FARE laboratory extruder (barrel O 45 mm, L/D=42) equipped with a spin pump and a spinnarette (die) having 444 cylindrical openings of 0.65 mm O. The temperature of the extruder could be independently regulated over 12 zones and the take-off system was positioned approximately 2 m below the spinnarette.

Two successful trial runs were carried out, the conditions and results are given in Table 2. The quality of the fibres produced in both runs was very good even though the take-off system (which had been developed for thermoplastic fibres) had problems coping with the highly elastic low modules fibres.

TABLE 2

| Trial run | 1 | 2 |
|---|---|---|
| Extruder speed, rpm | 16 | 16 |
| Pump speed, rpm | 6.0 | 6.0 |
| Pressure, bar | 36 | 60 |
| Melt extrusion speed, cm/min | 30 | 30 |
| Output, kg/hr | 2.4 | 2.4 |
| Take-off speed, cm/min* | 60—100 | 60—100 |
| Fibre diameter, mm | 0.33 | 0.31 |
| Draw down ratio | ~5 | ~5 |

* Accurate control of take-off speed was not possible and limited to minimum setting.

**Claims for the Contracting States: BE, CH, DE, FR, GB, IT, LI, LU, NL, SE**

1. A melt-spinnable or melt-blowable composition consisting of:—

a) from 55 to 85 parts by weight of at least one three block copolymer having two endblocks A and a midblock B, wherein the blocks A are monoalkenyl arene polymer blocks and the B block is a substantially completely hydrogenated conjugated diene polymer block, the number average molecular weight of the or each three block copolymer being in the range of from 16000 to 175000, the number average molecular weight of the A blocks being in the range of from 4000 to 30000 and the monoalkenyl arene content of the or each three block copolymer being in the range of from 10 to 50% by weight of that three block copolymer,

b) from 15 to 45 parts by weight of at least one two block copolymer C—D, wherein the C block is a monoalkenyl arene polymer block having a number average molecular weight in the range of from 4000 to 30000, and the D block is a substantially completely hydrogenated conjugated diene polymer block having a number average molecular weight in the range of from 25 to 75% of the number average molecular weight of the midblock B of the or each three block copolymer, the precursor blocks B and/or D present in the composition being hydrogenated to at least 80% of the aliphatic double bonds while the precursor blocks A and/or C being hydrogenated to not more than 25% of the alkenyl arene aromatic double bonds and wherein the total parts by weight of said three block copolymer or copolymers and of said two block copolymer or copolymers employed in said melt-spinnable or melt-blowable composition, equals 100 parts by weight, and

c) optionally antidegradants, UV protectors, processing aids, antistatic agents, dyes, reflective inorganic fillers and small amounts of organic fillers.

2. A composition according to claim 1, wherein the number average molecular weight of the monoalkenyl arene blocks A is in the range of from 4500 to 12000.

3. A composition according to claim 1 or 2, wherein the monoalkenyl arene content of the or each three block copolymer is in the range of from 12 to 35% by weight of that three block copolymer.

4. A composition according to any one of the preceding claims, wherein the number average molecular weight of block D is in the range of from 40 to 60% of the molecular weight of midblock B of the or each three block copolymer.

5. A composition according to any one of the preceding claims, wherein said blocks A and said block C are polystyrene blocks.

6. A composition according to any one of the preceding claims, wherein said block B and said block D are substantially completely hydrogenated polybutadiene blocks.

7. Fibres manufactured from a melt-spinnable or melt-blowable composition as claimed in any one of the preceding claims.

**Claims for the Contracting State: AT**

1. Process for the preparation of a melt-spinnable or melt-blowable composition consisting of:

a) from 55 to 85 parts by weight of at least one three block copolymer having two endblocks A and a midblock B, wherein the blocks A are monoalkenyl arene polymer blocks and the B block is a substantially completely hydrogenated conjugated diene polymer block, the number average molecular weight of the or each three block copolymer being in the range of from 16000 to 175000, the number average molecular weight of the A blocks being in the range of from 4000 to 30000 and the monoalkenyl arene content of the or each three block copolymer being in the range of from 10 to 50% by weight of that three block copolymer,

b) from 15 to 45 parts by weight of at least one two block copolymer C—D, wherein the C block is a monoalkenyl arene polymer block having a number average molecular weight in the range of from 4000 to 30000, and the D block is a substantially completely hydrogenated conjugated diene polymer block having a number average molecular weight in the range of from 25 to 75% of the number average molecular weight of the midblock B of the or each three block copolymer, the precursor blocks B and/or D present in the composition being hydrogenated to at least 80% of the aliphatic double bonds while the precursor blocks A and/or C being hydrogenated to not more than 25% of the alkenyl arene aromatic double bonds and wherein the total parts by weight of said three block copolymer or copolymers and of said two block copolymer or copolymers employed in said melt-spinnable or melt-blowable composition, equals 100 parts by weight, and

c) optionally antidegradants, UV protectors, processing aids, antistatic agents, dyes, reflective inorganic fillers and small amounts of organic fillers,

by melt blending the hydrogenated three and two block copolymers in the required ratio e.g. in a continuous extruder mixer; by blending solutions of the precursor three block and precursor two block copolymer and subsequent hydrogenation of the resulting precursor blend or by preparation of the precursor three block copolymer and the precursor two block copolymer simultaneously in a single reactor and subsequent hydrogenation.

2. Process according to claim 1, wherein the number average molecular weight of the monoalkenyl arene blocks A is in the range of from 4500 to 12000.

3. Process according to claim 1 or 2, wherein the monoalkenyl arene content of the or each three block copolymer is in the range of from 12 to 35% by weight of that three block copolymer.

4. Process according to any one of the preceding claims, wherein the number average molecular weight of block D is in the range of from 40 to 60% of the molecular weight of midblock B of the or each three block copolymer.

5. Process according to any one of the preceding claims, wherein said blocks A and said block C are polystyrene blocks.

6. Process according to any one of the preceding claims, wherein said block B and said block D are substantially completely hydrogenated polybutadiene blocks.

7. Fibres manufactured from a melt-spinnable or melt-blowable composition, obtainable by the process according to any one of the claims 1—6.

**Patentansprüche für die Vertragsstaaten: BE, CH, DE, FR, GB, IT, LI, LU, NL, SE**

1. Schmelzspinnbare oder schmelzblasbare Zusammensetzung, bestehend aus:

a) von 55 bis 85 Gewichtsteilen mindestens eines Dreiblockcopolymers mit 2 Endblöcken A und einem Mittelblock B, worin die A-Blöcke Monoalkenylarenpolymerblöcke sind und der B-Block ein im wesentlichen vollständig hydrierter, konjugierter Dienpolymerblock ist, wobei das Zahlenmittel-Molekulargewicht des oder jedes Dreiblockcopolymers im Bereich von 16.000 bsi 175.000 beträgt, das Zahlenmittel-Molekulargewicht der A-Blöcke im Bereich von 4.000 bis 30.000 liegt und der Monoalkenylarengehalt des oder jedes Dreiblockcopolymers im Bereich von 10 bis 50 Gew.-% dieses Dreiblockcopolymers beträgt,

b) von 15 bis 45 Gewichtsteilen mindestens eines Zweiblockcopolymers C—D, worin der C-Block ein Monoalkenylarenpolymerblock mit einem Zahlenmittel-Molekulargewicht im Bereich von 4.000 bis 30.000 ist und der D-Block ein im wesentlichen vollständig hydrierter konjugierter Dienpolymerblock mit einem Zahlenmittel-Molekulargewicht im Bereich von 25 bis 75% des Zahlenmittel-Molekulargewichts des Mittelblocks B des oder jedes Dreiblockcopolymers ist, wobei in den in der Zusammensetzung vorliegenden Precursorblöcken B und/oder D mindestens 80% der aliphatischen Doppelbindungen hydriert

EP 0 211 466 B1

sind, wogegen in den Precursorblöcken A und/oder C nicht mehr als 25% der aromatischen Alkenylarendoppelbindungen hydriert sind und worin die Gesamtgewichtsteile des genannten Dreiblockcopolymers oder der -copolymeren und des genannten Zweiblockcopolymers oder der -copolymeren, welche in den genannten schmelzspinnbaren oder schmelzblasbaren Zusammensetzungen angewandt werden, 100 Gewichtsteilen entsprechen, und

c) fakultativ Antiabbaumitteln, UV-Schutzmitteln, Verarbeitungshilfsstoffen, antistatischen Mitteln, Farbstoffen, reflektierenden anorganischen Füllstoffen und geringen Mengen an organischen Füllstoffen.

2. Zusammensetzung nach Anspruch 1, worin das Zahlenmittel-Molekulargewicht der Monoalkenylarenblöcke A im Bereich von 4.500 bis 12.000 liegt.

3. Zusammensetzung nach Anspruch 1 oder 2, worin der Monoalkenylarengehalt des oder jedes Dreiblockcopolymers im Bereich von 12 bis 35 Gew.-% dieses Dreiblockcopolymers beträgt.

4. Zusammensetzung nach einem der vorherstehenden Ansprüche, worin das Zahlenmittel-Molekulargewicht von Block D im Bereich von 40 bis 60% des Molekulargewichtes vom Mittelblock B des oder jedes Dreiblockcopolymers beträgt.

5. Zusammensetzung nach einem der vorherstehenden Ansprüche, worin die genannten Blöcke A und der genannte Block C Polystyrolblöcke sind.

6. Zusammensetzung nach einem der vorherstehenden Ansprüche, worin der genannte Block B und der genannte Block D im wesentlichen vollständig hydrierte Polybutadienblöcke sind.

7. Aus einer schmelzspinnbaren oder schmelzblasbaren Zusammensetzung nach einem der vorstehenden Ansprüche hergestellte Fasern.

**Patentansprüche für den Vertragsstaat: AT**

1. Verfahren zur Herstellung einer schmelzspinnbaren oder schmelzblasbaren Zusammensetzung, bestehend aus:

a) von 55 bis 85 Gewichtsteilen mindestens eines Dreiblockcopolymers mit 2 Endblöcken A und einem Mittelblock B, worin die A-Blöcke Monoalkenylarenpolymerblöcke sind und der B-Block ein im wesentlichen vollständig hydrierter, konjugierter Dienpolymerblock ist, wobei das Zahlenmittel-Molekulargewicht des oder jedes Dreiblockcopolymers im Bereich von 16.000 bsi 175.000 beträgt, das Zahlenmittel-Molekulargewicht der A-Blöcke im Bereich von 4.000 bis 30.000 liegt und der Monoalkenylarengehalt des oder jedes Dreiblockcopolymers im Bereich von 10 bis 50 Gew.-% dieses Dreiblockcopolymers beträgt.

b) von 15 bis 45 Gewichtsteilen mindestens eines Zweiblockcopolymers C—D, worin der C-Block ein Monoalkenylarenpolymerblock mit einem Zahlenmittel-Molekulargewicht im Bereich von 4.000 bis 30.000 ist und der D-Block ein im wesentlichen vollständig hydrierter konjugierter Dienpolymerblock mit einem Zahlenmittel-Molekulargewicht im Bereich von 25 bis 75% des Zahlenmittel-Molekulargewichts des Mittelblocks B des oder jedes Dreiblockcopolymers ist, wobei in den in der Zusammensetzung vorliegenden Precursorblöcken B und/oder D mindestens 80% der aliphatischen Doppelbindungen hydriert sind, wogegen in den Precursorblöcken A und/oder C nicht mehr als 25% der aromatischen Alkenylarendoppelbindungen hydriert sind und worin die Gesamtgewichtsteile des genannten Dreiblockcopolymers oder der -copolymeren und des genannten Zweiblockcopolymers oder der -copolymeren, welche in den genannten schmelzspinnbaren oder schmelzblasbaren Zusammensetzungen angewandt werden, 100 Gewichtsteilen entsprechen, und

c) fakultativ Antiabbaumitteln, UV-Schutzmitteln, Verarbeitungshilfsstoffen, antistatischen Mitteln, Farbstoffen, reflektierenden anorganischen Füllstoffen und geringen Mengen an organischen Füllstoffen, durch Schmelzvermischen der hydrierten Drei- und Zweiblockcopolymere im erforderlichen Verhältnis, z.B. in einem kontinuierlichen Extrudermischer; durch Vermischen von Lösungen des Precursor-Dreiblock- und des Precursor-Zweiblockcopolymers und darauffolgendes Hydrieren des resultierenden Precursorgemisches oder durch gleichzeitiges Herstellen des Precursor-Dreiblockcopolymers und des Precursor-Zweiblockcopolymers in einem einzigen Reaktor und darauffolgende Hydrierung.

2. Verfahren nach Anspruch 1, worin das Zahlenmittel-Molekulargewicht der Monoalkenylarenblöcke A im Bereich von 4.500 bis 12.000 liegt.

3. Verfahren nach Anspruch 1 oder 2, worin der Monoalkenylarengehalt des oder jedes Dreiblockcopolymers im Bereich von 12 bis 35 Gew.-% dieses Dreiblockcopolymers beträgt.

4. Verfahren nach einem der vorstehenden Ansprüche, worin das Zahlenmittel-Molekulargewicht von Block D im Bereich von 40 bis 60% des Molekulargewichtes vom Mittelblock B des oder jedes Dreiblockcopolymers beträgt.

5. Verfahren nach einem der vorstehenden Ansprüche, worin die genannten Blöcke A und der genannte Block C Polystyrolblöcke sind.

6. Verfahren nach einem der vorstehenden Ansprüche, worin der genannte Block B und der genannte Block D im wesentlichen vollständig hydrierte Polybutadienblöcke sind.

7. Fasern, hergestellt aus einer durch das Verfahren nach einem der Ansprüche 1 bis 6 erhältlichen, schmelzspinnbaren oder schmelzblasbaren Zusammensetzung.

9

## EP 0 211 466 B1

**Revendications pour les Etats Contractants: BE, CH, DE, FR, GB, IT, LI, LU, NL, SE**

1. Composition pour filer ou souffler par fusion constituée de:

a) de 55 à 85 parties en poids d'au moins un copolymère A à trois séquences ayant deux séquences finales et une séquence médiane B où les séquences A sont des séquences de polymère de monoalcényl-arène et la séquence B est une séquence de polymère de diène conjuguée, essentiellement complètement hydrogénée, le poids moléculaire moyen en nombre du ou de chacun des trois copolymères séquencés étant dans un intervalle de 16 000 à 175 000, le poids moléculaire moyen en nombre des séquences A étant dans un intervalle de 4 000 à 30 000 et la teneur en monoalcényl-arène du ou de chacun des trois polymères séquencés étant dans un intervalle de 10 à 50% en poids de celui du copolymère à trois séquences,

b) de 15 à 45 parties en poids d'au moins un copolymère à deux séquences C—D où la séquence C est une séquence de monoalcényl-arène ayant un poids moléculaire moyen en nombre dans un intervalle de 4 000 à 30 000 et la séquence D est une séquence de polymère de diène conjugué essentiellement complètement hydrogéné ayant un poids moléculaire moyen en nombre dans un intervalle allant de 25 à 75% du poids moléculaire moyen en nombre de la séquence médiane B du ou de chacun des trois copolymères séquencés, les séquences précurseurs B et/ou D présentes dans la composition étant hydrogénées à au moins 80% des doubles liaisons aliphatiques tandis que les séquences précurseurs A et/ou C sont hydrogénées au plus à 25% des doubles liaisons aromatiques alcényl-arène, et où le nombre total de parties en poids du ou desdits copolymères à trois séquences et du ou desdits copolymères à deux séquences employés dans ladite composition filable par fusion ou soufflable par fusion est égale à 100 parties en poids, et

c) éventuellement des anti-dégradants, des agents de protection anti-UV, des adjuvants de traitement, des agents anti-statiques, des colorants, des charges inorganiques réfléchissantes et de faibles quantités de charges organiques.

2. Composition selon la revendication 1, où le poids moléculaire moyen en nombre des séquences de monoalcényl-arène est dans un intervalle allant de 4 500 à 12 000.

3. Composition selon la revendication 1 ou 2, où la teneur en monoalcényl-arène du ou de chacun des copolymères à trois séquences est dans un intervalle allant de 12 à 35% en poids de celui du copolymère à trois séquences.

4. Composition selon l'une quelconque des revendications précédentes où le poids moléculaire moyen en nombre de la séquence D est dans un intervalle allant de 40 à 60% du poids moléculaire de la séquence médiane B du ou de chacun des copolymères à trois séquences.

5. Composition selon l'une quelconque des revendications précédentes, où lesdites séquences A et ladite séquence C sont des séquences de polystyrène.

6. Composition selon l'une quelconque des revendications précédentes, où ladite séquence B et ladite séquence D sont des séquences de polybutadiène essentiellement complètement hydrogénées.

7. Fibres préparées à partir d'une composition filable par fusion ou soufflable par fusion telles que revendiquées dans l'une quelconque des revendications précédentes.

**Revendications pour l'Etat Contractant: AT**

1. Procédé de préparation d'une composition pour filer ou souffler par fusion constituée de:

a) de 55 à 85 parties en poids d'au moins un copolymère A à trois séquences ayant deux séquences finales et une séquence médiane B où les séquences A sont des séquences de polymère de monoalcényl-arène et la séquence B est une séquence de polymère de diène conjuguée, essentiellement complètement hydrogénée, le poids moléculaire moyen en nombre du ou de chacun des trois copolymères séquencés étant dans un intervalle de 16 000 à 175 000, le poids moléculaire moyen en nombre des séquences A étant dans un intervalle de 4 000 à 30 000 et la teneur en monoalcényl-arène du ou de chacun des trois polymères séquencés étant dans un intervalle de 10 à 50% en poids de celui du copolymère à trois séquences,

b) de 15 à 45 parties en poids d'au moins un copolymère à deux séquences C—D où la séquence C est une séquence de monoalcényl-arène ayant un poids moléculaire moyen en nombre dans un intervalle de 4 000 à 30 000 et la séquence D est une séquence de polymère de diène conjugué essentiellement complètement hydrogéné ayant un poids moléculaire moyen en nombre dans un intervalle allant de 25 à 75% du poids moléculaire moyen en nombre de la séquence médiane B du ou de chacun des trois copolymères séquencés, les séquences précurseurs B et/ou D présentes dans la composition étant hydrogénées à au moins 80% des doubles liaisons aliphatiques tandis que les séquences précurseurs A et/ou C sont hydrogénées au plus à 25% des doubles liaisons aromatiques alcényl-arène, et où le nombre total de parties en poids du ou desdits copolymères à trois séquences et du ou desdits copolymères à deux séquences employés dans ladite composition filable par fusion ou soufflable par fusion est égale à 100 parties en poids, et

c) éventuellement des anti-dégradants, des agents de protection anti-UV, des adjuvants de traitement, des agents anti-statiques, des colorants, des charges inorganiques réfléchissantes et de faibles quantités de charges organiques,

en mélangeant par fusion les copolymères à deux et à trois séquences hydrogénées dans le rapport requis, p. ex. dans un mélangeur-extrudeur continu; en mélangeant des solutions de copolymères à trois séquences précurseurs et de copolymères à deux séquences précurseurs puis en hydrogénant le mélange précurseur résultant ou en préparant le copolymère à trois séquences précurseur et le copolymère à deux séquences précurseur simultanément dans un seul réacteur puis en hydrogénant.

2. Procédé selon la revendication 1, où le poids moléculaire moyen en nombre des séquences de monoalcényl-arène A est dans un intervalle allant de 4 500 à 12 000.

3. Procédé selon la revendication 1 ou 2, où la teneur en monoalcényle-arène du ou de chacun des copolymères à trois séquences est dans un intervalle allant de 12 à 35% en poids de celui du copolymère à trois séquences.

4. Procédé selon l'une quelconque des revendications précédentes, où le poids moléculaire moyen en nombre de la séquence D est dans un intervalle allant de 40 à 60% du poids moléculaire de la séquence médiane B du ou de chacun des copolymères à trois séquences.

5. Procédé selon l'une quelconque des revendications précédentes, dans lequel lesdites séquences A et ladite séquence C sont des séquences de polystyrène.

6. Procédé selon l'une quelconque des revendications précédentes, dans lequel ladite séquence B et ladite séquence D sont des séquences de polybutadiène essentiellement complètement hydrogénées.

7. Fibres préparées à partir d'une composition filable par fusion ou soufflable par fusion, que l'on peut obtenir par le procédé, selon l'une quelconque des revendications 1—6.